# EUROPEAN PATENT APPLICATION

(11) **EP 3 291 435 A1**
(43) Date of publication of application: **07.03.2018**
(21) Application number: 16186427.7
(22) Date of filing: 30.08.2016
(51) Int. Cl.: H02M 7/487, H02M 1/00

(54) **AN ACTIVE NEUTRAL POINT CLAMPED CONVERTER WITH SILICON CARBIDE MOS-FET OUTPUT SWITCHES**

(71) Applicant: Rohm Co., Ltd., Kyoto-shi, Kyoto 615-8585 (JP)
(72) Inventor: Scarpa, Vladimir, Kyoto-shi, Kyoto 615-8585 (JP)
(74) Representative: Isarpatent

(57) **Abstract**

An active neutral point clamped converter (1) comprising serial connected polarity switches (2-1, 2-2, 2-3, 2-4), including an inner pair of polarity switches (2-2, 2-3) and at least one outer pair of polarity switches (2-1, 2-4), a pair of serial connected modulation switches (5-1, 5-2) connected in parallel with said inner pair of polarity switches (2-2, 2-3), wherein said modulation switches (5-1, 5-2) are silicon carbide MOSFET switches.

## Description

The invention relates to an active neutral point clamped converter which can be used in a renewable energy generation apparatus or an energy storage apparatus.

The increasing demand for higher power makes it necessary for power processors to operate with higher current and voltage levels. In recent years, there has been an increasing interest in generating power from renewable resources such as solar and wind power. In the solar field, for instance, the increase of input voltages promote the use of multi-level topologies. The input voltage is divided to reduce the blocking voltage required by the power semiconductors. A neutral point clamped, NPC, converter with three levels has been described in US 6,838,925 B1 where the required blocking voltage is divided by half.

Active neutral point clamped, ANPC, converters such as proposed in prior art document DE 10 2012 107 122 A1 offer the possibility to change a modulation scheme and the power conversion can be made using fewer high frequency switches.

US 2012/0218785 A1 describes a three-level active neutral point clamped zero voltage switching converter comprising main switches connected in series including at least an inner pair of main switches and an outer pair of main switches. The converter further comprises a clamping circuit including additional main switches connected in parallel with the inner pair of main switches. The main switches of this conventional three-level active neutral point clamped zero voltage switching power converter are formed by insulated gate bipolar transistors (IGBTs) devices, out of silicon.. Each of the main switches has a diode connected antiparallel with the respective main switch.

Despite their lower cost, a disadvantage of silicon IGBTs is the slow dynamic behavior. Their use is therefore not suitable for converters operating at high input DC voltages that may the generated by photovoltaic modules.

Accordingly, it is an object of the present invention to provide an active neutral point clamped converter which is suitable for high input DC voltages.

This object is achieved according to a first aspect of the present invention by an active neutral point clamped converter comprising the features of claim 1.

A further advantage of the converter is that it offers also ease of implementation.due to its minimum amount of high frequency switches, only one third of the total switches. To decrease implementation cost, low frequency switches can be still implemented with Si IGBTs, whilst high frequency switches are to be implemented with metal oxide semiconductor field effect transistor (MOSFET), out of silicon carbide.

The invention provides according to the first aspect an active neutral point clamped converter comprising serial connected polarity switches, including an inner pair of polarity switches and at least one outer pair of polarity switches; and
a pair of serial connected modulation switches connected in parallel with said inner pair of polarity switches, wherein said modulation switches are silicon carbide MOSFET switches.

An advantage of the active neutral point clamped converter comprising the features of claim 1 is that the converter can operate as a bidirectional device, i.e. it can be connected to a power supply grid to supply power to the power supply grid and also to receive power from the power supply grid.

A further advantage of the active neutral point clamped converter comprising the features of claim 1 is that the converter can have bidirectional operation and that the use of the silicon carbide MOSFET switches, with intrinsic body diode, thus enables the operation with any power factor.

The active neutral point clamped converter according to the first aspect of the present invention further increases efficiency due to missing saturation voltages during conduction and provides lower dynamic losses.

The use of silicon carbide MOSFET switches provides for high blocking voltages so that the active neutral point clamped converter can be used for high input DC voltages which may be generated by a DC generation unit.

In a possible embodiment of the active neutral point clamped converter according to the first aspect of the present invention, each modulation switch comprises a high blocking voltage of more than 750 Volts.

In a further possible embodiment of the active neutral point clamped converter according to the first aspect of the present invention, each modulation switch comprises a gate adapted to receive a PWM control signal.

In a still further possible embodiment of the active neutral point clamped converter according to the first aspect of the present invention, the PWM control signal has a frequency in a frequency range between 16 kHz to 48 kHz.

In a still further possible embodiment of the active neutral point clamped converter according to the first aspect of the present invention, the modulation switches are operated complementary to each other in response to PWM control signals applied to the gates of the modulation switches.

In a still further possible embodiment of the active neutral point clamped converter according to the first aspect of the present invention, the polarity switches are low frequency switches adapted to operate at an AC line frequency of a power supply grid.

In a still further possible embodiment of the active neutral point clamped converter according to the first aspect of the present invention, the active neutral point clamped converter is a bidirectional converter adapted to supply power to a power supply grid connected to the output terminal of the active neutral point clamped converter.

In a still further possible embodiment of the active neutral point clamped converter according to the first aspect of the present invention, the active neutral point clamped converter is a bidirectional converter being further adapted to receive power from a power supply grid connected to the output terminal of the active neutral point clamped converter.

In a still further possible embodiment of the active neutral point clamped converter according to the first aspect of the present invention, both terminals of a string of serial connected polarity switches and the active neutral point node are connected to a power generator or to a power storage.

In a still further possible embodiment of the active neutral point clamped converter according to the first aspect of the present invention, the modulation switches are silicon carbide MOSFET switches with a trench structure.

In a still further possible alternative embodiment of the active neutral point clamped converter according to the first aspect of the present invention, the modulation switches are silicon carbide MOSFET switches with a planar structure.

The invention further provides according to a second aspect a renewable energy generation apparatus comprising the features of claim 14.

The invention provides according to the second aspect a renewable energy generation apparatus comprising a DC generation unit adapted to generate a DC-voltage and an active neutral point clamped converter according to the first aspect of the present invention.

The invention further provides according to a third aspect an energy storage apparatus comprising the features of claim 15.

The invention provides according to the third aspect an energy storage apparatus comprising a power storage unit adapted to store electrical power and an active neutral point clamped converter according to the first aspect of the present invention.

In the following, possible embodiments of the different aspects of the present invention are described in more detail with reference to the enclosed figures.
- Fig. 1: shows a circuit diagram of a possible exemplary embodiment of an active neutral point clamped converter according to the first aspect of the present invention;
- Figs. 2 to 5: show circuit diagrams for illustrating different operation modes of the active neutral point clamped converter according to the first aspect of the present invention.

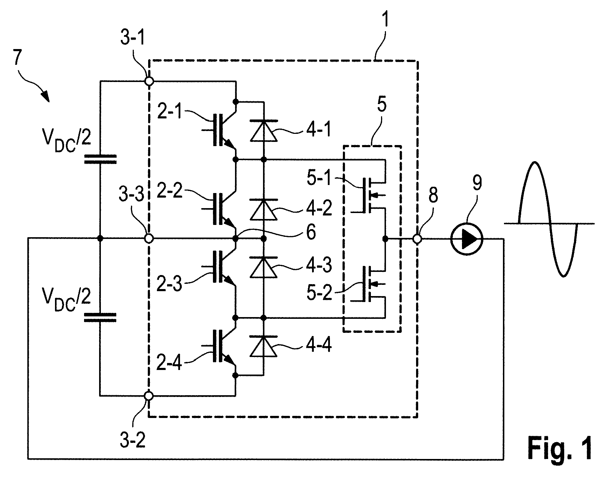

As can be seen from the circuit diagram of Fig. 1, the active neutral point clamped converter 1 comprises in the illustrated exemplary embodiment a string of serial connected polarity switches 2-1, 2-2, 2-3, 2-4 connected between a first input terminal 3-1 and a second input terminal 3-2. The serial connected polarity switches are formed in the illustrated exemplary embodiment by silicon IGBTs. The serial connected polarity switches include in the illustrated embodiment an inner pair of polarity switches 2-2, 2-3 and an outer pair of polarity switches 2-1, 2-4. Each of the polarity switches 2-1 to 2-4 comprises an antiparallel connected diode 4-1, 4-2, 4-3, 4-4 as illustrated in Fig. 1. The active neutral point clamped converter 1 further comprises in the illustrated embodiment a pair of serial connected modulation switches 5-1, 5-2. The pair of serial connected modulation switches 5-1, 5-2 is connected in parallel with the inner pair of polarity switches 2-2, 2-3 as can be seen in Fig. 1. The modulation switches 5-1, 5-2 are formed by silicon carbide MOSFET switches. The modulation switches 5-1, 5-2 are bidirectional silicon carbide MOSFET switches each having an intrinsic body diode.

The polarity switches 2-1, 2-2, 2-3, 2-4 are low frequency switches which are adapted to operate as an AC line frequency of a power supply grid 9 at a frequency of 50 or 60 Hz. In a possible embodiment, the low frequency switches are formed by silicon IGBTs as illustrated in Fig. 1. The inner pair of serial connected polarity switches comprises two polarity switches 2-2, 2-3 which are connected to each other at an active neutral point node 6 of the active neutral point clamped converter 1. The active neutral point node 6 is connected to a third input terminal 3-3 of the active neutral point clamped converter 1. In the illustrated embodiment of Fig. 1, the input terminals 3-1, 3-2, 3-3 are connected to a DC generation unit which is formed in the illustrated embodiment by photovoltaic modules providing a high DC voltage to the input of the converter 1. The photovoltaic modules of the DC generation unit may provide for instance a high voltage of 1500 Volts to the input terminals 3-i of the converter 1. As illustrated in Fig. 1, one half of the input voltage is applied between input terminals 3-1, 3-3 and the other half of the input voltage is applied between input terminals 3-3, 3-2 of the converter 1. The DC voltage generated by the DC generation unit 7 can comprise for example 1500 Volts so that a DC voltage of approximately 750 Volts is applied between input terminals 3-1 and 3-3 as well as between input terminals 3-3 and 3-2. As can be seen in Fig. 1, the input terminal 3-3 of the converter 1 is connected directly to the active neutral point node 6 of the converter 1. In a possible embodiment of the active neutral point clamped converter 1, each modulation switch comprises a high blocking voltage of more than 750 Volts. Further, as can be seen in Fig. 1, the polarity switches 2-1, 2-2, 2-3, 2-4 can each be implemented by a silicon IGBT providing a lower blocking voltage. This is possible since the IGBTs are connected in series to each other as illustrated in Fig. 1. Accordingly, in the active neutral point clamped converter 1 as illustrated in the embodiment of Fig. 1, there are four serial connected polarity switches implemented by IGBTs and two serial connected modulation switches implemented by silicon carbide MOSFET switches. The polarity switches operate at an AC line frequency typically at a frequency of 50 or 60 Hz. Accordingly, only two out of six switches of the active neutral point clamped converter 1 operate at a high frequency in the kilohertz frequency range. The other four switches which are implemented in the illustrated embodiment by IGBTs operate as polarity switches at a low frequency defining the current path for the electrical current according to a sinusoidal polarity being either negative or positive. Accordingly, the low frequency switches implemented in the illustrated exemplary embodiment with silicon IGBTs can be produced at lower costs than high frequency switches.

As can be seen in Fig. 1, the pair of serial connected modulation switches comprises two modulation switches 5-1, 5-2 which are connected to each other at an output terminal 8 of the active neutral point clamped converter 1. In a possible embodiment, the output terminal 8 of the active neutral point clamped converter 1 can be connected to a power supply grid symbolized by element 9 illustrated in Fig. 1. Accordingly, the active neutral point clamped converter 1 according to the first aspect of the present invention is in the illustrated embodiment a bidirectional converter adapted to supply power to the power supply grid 9 connected to the output terminal 8 of the active neutral point clamped converter 1 and to receive power from the power supply grid 9 connected to the output terminal 8 of the active neutral point clamped converter 1. In alternative embodiments, other loads or circuits can be connected to the output terminal 8 of the active neutral point clamped converter 1.

In the illustrated embodiment of Fig. 1, the terminals 3-1, 3-2 connected to the string of serial connected polarity switches 2-1 to 2-4 and the active neutral point node 6 are connected to a power generator applying a generated DC voltage to the input of the converter 1. In an alternative embodiment, the input terminals of the active neutral point clamped converter 1 can also be connected to a power storage device such as a battery for storing electrical power received for instance from the power supply grid 9.

The polarity switches 2-1, 2-2, 2-3, 2-4 comprise gates which are adapted to receive operation mode control signals. In a possible embodiment, the polarity switches 2-1 to 2-4 are formed by IGBTs having gates adapted to receive operation mode control signals from a microcontroller which can be integrated in the active neutral point clamped converter 1. With the operation mode control signals, the microcontroller of the active neutral point clamped converter 1 can control different operation modes of the active neutral point clamped converter 1. Further, each modulation switch 5-1, 5-2 comprises a gate adapted to receive a PWM control signal. The PWM control signal comprises a frequency in the kilohertz range. In a possible implementation, the PWM control signal has a frequency in a frequency range between 16 kHz and 48 kHz. The modulation switches 5-1, 5-2 are operated complementary to each other in response to the received PWM control signals applied to the gates of the modulation switches 5-1, 5-2. The active neutral point clamped converter 1 as illustrated in Fig. 1 provides a high blocking voltage capability which allows to increase an applied input DC voltage which may be generated by a DC generation unit 7. The modulation switches 5-1, 5-2 comprise much lower dynamic losses in comparison to equivalent silicon switches. This allows to increase the switching frequency and consequently a reduction of filters reducing both volume and weight of the active neutral point clamped converter 1. The use of silicon carbide modulation switches 5-1, 5-2 therefore increases the efficiency and power density of the active neutral point clamped converter 1 according to the first aspect of the present invention. The active neutral point clamped converter 1 as illustrated in Fig. 1 is connected in a possible embodiment to a decentralized energy generator which provides renewable energies like solar energy or wind energy. The active neutral point clamped converter 1 is further adapted to process reactive power received from the power supply grid 9. In a possible embodiment, the silicon carbide MOSFET switches 5-1, 5-2 are implemented by silicon carbide MOSFET switches having a trench structure. In an alternative embodiment, the silicon carbide MOSFET switches can also be implemented by silicon carbide MOSFET switches having a planar structure. In the illustrated embodiment of Fig. 1, the polarity switches are implemented by low frequency switches formed by IGBTs. In an alternative embodiment, the low frequency switches 2-1 to 2-4 can also be implemented by silicon MOSFETs. Further, it is also possible to implement the polarity switches 2-1, 2-2 also by silicon carbide MOSFETs to reduce conduction losses. Accordingly, in this embodiment, the polarity switches are implemented also by silicon carbide MOSFET switches. In an alternative embodiment, the serial connected polarity switches are implemented by low frequency switches, for instance by IGBTs or silicon MOSFETs wherein each of said polarity switches has an antiparallel connected diode.

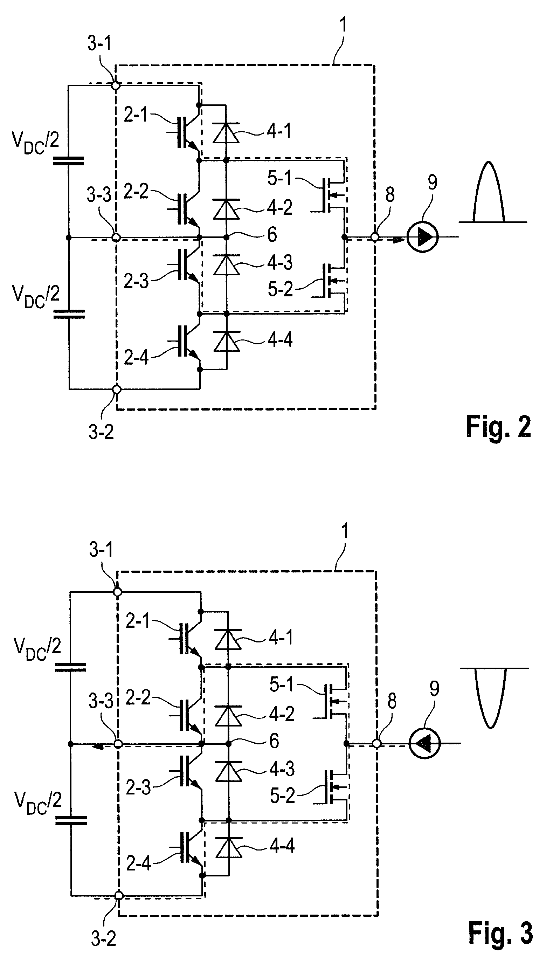

Figs. 2, 3, 4, 5 are used to illustrate the operation principle of the active neutral point clamped converter 1 according to the first aspect of the present invention. Fig. 2 shows the current paths for generating a positive half-sine voltage which can be supplied by the converter to the power supply grid 9. In the operation mode illustrated in Fig. 2, the polarity switches 2-1, 2-3 are switched on while the other two polarity switches 2-2, 2-4 are switched off. Fig. 2 accordingly illustrates a first operation mode. Assuming a sinusoidal output voltage as it is typical for grid connected applications, the converter 1 comprises basically four modes of operation when processing active power, i.e. a positive step and freewheeling for a positive half-sine voltage swing as illustrated in Fig. 2 and a negative step and freewheeling for a negative half-sine voltage swing as illustrated in Fig. 3. In the operation mode illustrated in Fig. 3, the polarity switches 2-1, 2-3 are switched off while the polarity switches 2-2, 2-4 are switched on.

As can be seen in Fig. 2 showing the generation of the positive half-sine voltage the positive step current path flows through the first polarity switch 2-1 and the first modulation switch 5-1 to the output terminal 8 of the converter 1. The freewheeling current flows through the polarity switch 2-3 and the other modulation switch 5-2 also to the output terminal 8 of the converter 1 as illustrated in Fig. 2.

For generating the negative half-sine voltage as illustrated in Fig. 3, the polarity switches 2-1, 2-3 are switched off and the remaining polarity switches which have previously been switched off, i.e. polarity switches 2-2, 2-4 are switched on. Consequently, the freewheeling current path flows from the output terminal 8 through the first modulation switch 5-1 and the second polarity switch 2-2 to the active neutral point node 6 as shown in Fig. 3. Further, the negative step current path is from the output terminal 8 of the converter 1 through the second modulation switch 5-2 and the fourth polarity switch 2-4 as shown in Fig. 3.

In Figs. 2, 3, positive and negative half-sine voltages are generated and supplied to the power supply grid 9 connected to the output terminal 8 of the converter 1.

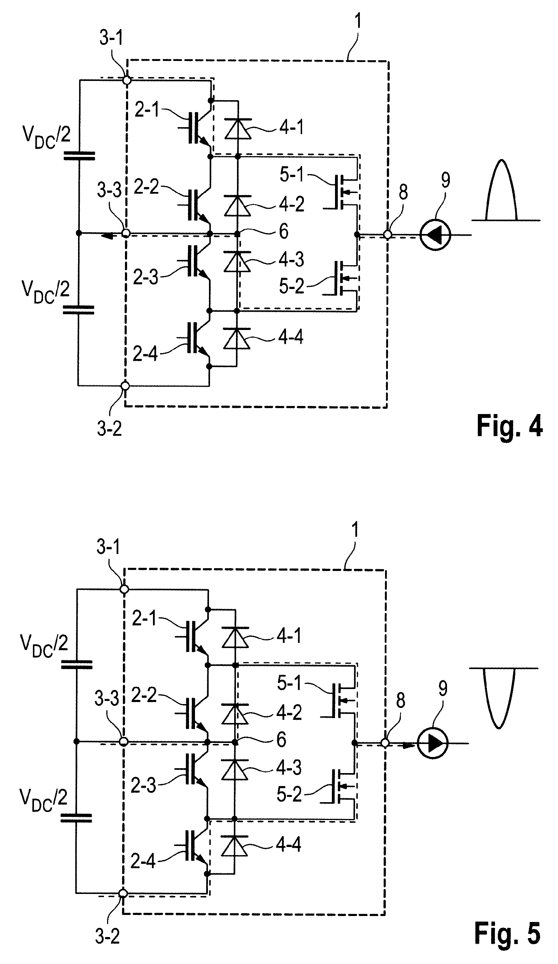

In contrast, as illustrated in Figs. 4, 5, the active neutral point clamped converter 1 is also adapted to process reactive power, i.e. receiving and processing positive or negative half-sine voltage received from the power supply grid 9. Similar to Fig. 2, the polarity switches 2-1, 2-3 are switched on while the other polarity switches 2-2, 2-4 are switched off. The positive step current path for the received positive half-sine voltage wave is through the first modulation switch 5-1 via the antiparallel connected diode 4-1 to the first terminal 3-1 of the converter 1. The freewheeling current path is from the output terminal 8 of the converter 1 through the second modulation switch 5-2 and through the antiparallel connected diode 4-3 to the active neutral point node 6 and terminal 3-3 of the converter 1.

The reactive power processing during the negative half-sine voltage as illustrated in Fig. 5 comprises also two current paths. Similar to Fig. 3, the polarity switches 2-2, 2-4 are switched on while the remaining polarity switches 2-1, 2-3 are switched off. The freewheeling current path is from the terminal 3-3 and the active neutral point node 6 through the diode 4-2 and the first modulation switch 5-1 to the output terminal 8 of the converter 1 as illustrated in Fig. 5. The negative step current path is from the terminal 3-2 through the diode 4-4 and the second modulation switch 5-2 to the output terminal 8 of the converter 1 as illustrated in Fig. 5.

In the operation states where positive or negative half-sine voltage is generated as illustrated in Figs. 2, 3, the provided current and voltage supplied to the power supply grid 9 have the same shape and polarity and are in-phased to each other so that the phase difference is zero (Δϕ = 0). Accordingly, the power factor cos ϕ = 1.

In the reactive power processing as illustrated in Figs. 4, 5, the power factor is adjustable between zero and 1. At a maximum phase shifty ϕ= 90°, the power factor is zero. At a minimum phase shift ϕ = 0, the power factor is 1. The power factor can be adjusted by a controller generating the PWM modulation signals applied to the gates of the modulation switches 5-1, 5-2 which are operated complementary to each other. Accordingly, the use of silicon carbide MOSFET switches as modulation switches allows the adjustment of the power factor during reactive processing of power received from the power supply grid 9.

The active neutral point clamped converter 1 as illustrated in Fig. 1 can be used in a renewable energy generation apparatus and also in an energy storage apparatus.

The invention provides according to a second aspect a renewable energy generation apparatus comprising a DC generation unit 7 adapted to generate a DC voltage and an active neutral point clamped converter 1 comprising serial connected polarity switches including an inner pair of polarity switches and at least one outer pair of polarity switches and further comprising a pair of serial connected modulation switches 5-1, 5-2 connected in parallel with said inner pair of polarity switches wherein said modulation switches 5-1, 5-2 are silicon carbide MOSFET switches.

The DC generation unit 7 can comprise several photovoltaic modules which are adapted to generate a DC voltage applied to the input terminals 3-1, 3-2, 3-3 of the active neutral point clamped converter 1 as illustrated in Fig. 1. The DC generation unit 7 can also be formed by a wind power generation unit adapted to generate a DC voltage.

The invention further provides according to a third aspect an energy storage apparatus comprising a power storage unit adapted to store electrical power and an active neutral point clamped converter 1, wherein the active neutral point clamped converter 1 comprises serial connected polarity switches including an inner pair of polarity switches and at least one outer pair of polarity switches and further comprising a pair of serial connected modulation switches 5-1, 5-2 connected in parallel with said inner pair of polarity switches, wherein the modulation switches are silicon carbide MOSFET switches. The power storage unit of the energy storage apparatus can comprise in a possible embodiment battery elements. The energy storage apparatus can comprise in a possible embodiment an uninterruptible power supply apparatus UPS.

In a possible embodiment, the active neutral point clamped converter 1 used in the renewable energy generation apparatus and in the energy storage apparatus comprises an integrated microprocessor adapted to generate the PWM control signals for the silicon carbide MOSFETs and the operation mode control signals for the polarity switches. In an alternative embodiment, the active neutral point clamped converter 1 comprises a first interface to receive the operation mode control signals from a remote controller and/or a second interface to receive the PWM control signals for the modulation switches 5-1, 5-2 of the active neutral point clamped converter 1.

The active neutral point clamped converter 1 according to the present invention employs silicon carbide MOSFET switches as modulation switches 5-1, 5-2. These silicon carbide MOSFET switches comprise in a preferred embodiment a blocking voltage of more than 750 Volts. The silicon carbide MOSFET switches comprise a lower switching loss than conventional IGBTs which enables higher switching frequency and less expensive cooling systems. Compared to conventional 600 Volts to 900 Volts silicon MOSFETs, the silicon carbide MOSFET switches 5-1, 5-2 used by the active neutral point clamped converter 1 comprise a much smaller chip area and very low recovery losses of body diodes. Similar to silicon MOSFETs, silicon carbide MOSFETs contain a parasitic body diode formed at a pn junction. General purpose silicon IGBT devices are not capable of conduction in reverse direction. In contrast, the body diode of the silicon carbide MOSFET switch can conduct in reverse. Also depending on the received gate signal, the silicon carbide MOSFET switch can operate in either direction. Further, unlike silicon IGBTs, the silicon carbide MOSFET switches employed by the converter 1 do not generate a tail current thus reducing loss by more than 50% for greater energy savings. In a possible embodiment, the modulation switches 5-1, 5-2 implemented as silicon carbide MOSFET switches allow to use switching frequencies of more than 50 kHz which is not possible when using conventional silicon IGBTs. This contributes to a smaller and lighter active neutral point clamped converter 1.

### REFERENCE SIGNS

- 1: active neutral point clamped converter
- 2: polarity switch
- 3: input terminal
- 4: diode
- 5: modulation switch
- 6: active neutral point node
- 7: power generation unit
- 8: output terminal
- 9: power supply grid

## Claims

1. An active neutral point clamped converter (1) comprising:
- serial connected polarity switches (2-1, 2-2, 2-3, 2-4), including an inner pair of polarity switches (2-2, 2-3) and at least one outer pair of polarity switches (2-1, 2-4),
- a pair of serial connected modulation switches (5-1, 5-2) connected in parallel with said inner pair of polarity switches (2-2, 2-3), wherein said modulation switches (5-1, 5-2) are silicon carbide MOSFET switches.

2. The active neutral point clamped converter according to claim 1, wherein each modulation (5-1, 5-2) switch comprises a high blocking voltage of more than 750 Volts.

3. The active neutral point clamped converter according to claim 1 or 2, wherein each modulation switch (5-1, 5-2) comprises a gate adapted to receive a PWM control signal.

4. The active neutral point clamped converter according to claim 3, wherein the PWM control signal has a frequency in a frequency range between 16 kHz to 48 kHz.

5. The active neutral point clamped converter according to any of the preceding claims 1 to 4, wherein the modulation switches (5-1, 5-2) are operated complementary to each other in response to PWM control signals applied to the gates of the modulation switches (5-1, 5-2).

6. The active neutral point clamped converter according to any of the preceding claims 1 to 5, wherein each modulation switch (5-1, 5-2) is a bidirectional silicon carbide MOSFET having an intrinsic body diode.

7. The active neutral point clamped converter according to any of the preceding claims 1 to 6, wherein the polarity switches (2-1, 2-2, 2-3, 2-4) are low frequency switches adapted to operate at an AC line frequency of a power supply grid (9).

8. The active neutral point clamped converter according to any of the preceding claims 1 to 7, wherein the inner pair of serial connected polarity switches (2-2, 2-3) comprises two polarity switches which are connected to each other at an active neutral point node (6).

9. The active neutral point clamped converter according to any of the preceding claims 1 to 8, wherein the pair of serial connected modulation switches (5-1, 5-2) comprises two modulation switches which are connected to each other at an output terminal (8) of said active neutral point clamped converter (1).

10. The active neutral point clamped converter according to any of the preceding claims 1 to 9, wherein the active neutral point clamped converter (1) is a bidirectional converter adapted to supply power to a power supply grid (9) connected to the output terminal (8) of said active neutral point clamped converter (1); and
to receive power from a power supply grid (9) connected to the output terminal (8) of said active neutral point clamped converter (1).

11. The active neutral point clamped converter according to any of the preceding claims 1 to 10, wherein the polarity switches (2-1, 2-2, 2-3, 2-4) comprise gates adapted to receive operation mode control signals from a microcontroller.

12. The active neutral point clamped converter according to any of the preceding claims 1 to 11, wherein both terminals (3-1, 3-2) of a string of serial connected polarity switches (2-1, 2-2, 2-3, 2-4) and the active neutral point node (6) are connected to a power generator (7) or to a power storage.

13. The active neutral point clamped converter according to any of the preceding claims 1 to 12, wherein the modulation switches (5-1, 5-2) are silicon carbide MOSFET switches with a trench structure or silicon carbide MOSFET switches with a planar structure.

14. A renewable energy generation apparatus comprising:
- a DC generation unit (7) adapted to generate a DC-voltage; and
- an active neutral point clamped converter (1) according to any of the preceding claims 1 to 13.

15. An energy storage apparatus comprising:
- a power storage unit adapted to store electrical power and an active neutral point clamped converter (1) according to any of the preceding claims 1 to 13.
